# EUROPEAN PATENT APPLICATION

(11) **EP 4 675 057 A1**
(43) Date of publication of application: **07.01.2026**
(21) Application number: 24186565.8
(22) Date of filing: 04.07.2024
(51) Int. Cl.: E04B 2/92, E04B 2/96, E04C 2/292

(54) **FAÇADE PANEL REINFORCEMENT**

(71) Applicant: Tulipps B.V., 5145 PW Waalwijk (NL)
(72) Inventor: WIDLAK, Eugenio Julius Alphonsus Maria, 5145 PW Waalwijk (NL)
(74) Representative: DeltaPatents B.V.

(57) **Abstract**

In one aspect, the invention relates to a reinforcement device for increasing the shear-load-carrying capacity of a sandwich panel (150) that forms part of a building façade and which is attached to a framework construction of the building. The device connects an outer skin (155) of the sandwich panel to a structural member (160) of the framework construction and comprises:
• a bush (110) of high bending stiffness with an axial length substantially equal to a thickness T of the sandwich panel;
• a closure plate (120) arrangeable at an exterior end face of the bush, such that an exterior surface of the closure plate lies flush with the outer skin (155) of the sandwich panel, whereby the closure plate has a first bore with a centre axis that coincides with a centre axis (112) of the bush, and whereby the closure plate is configured to permit radial and axial forces to be transmitted to the bush;
• a cover plate (130) comprising a second bore, adapted for coaxial arrangement with the first bore of the closure plate, which is configured for attachment via screws (135) to the outer skin (155) of the sandwich panel; and
• a bolt (140) having a threaded end (142) that is received through the first and second bores, which is configured for attachment in a threaded hole provided in the structural member (160).

## Description

### FIELD OF THE INVENTION

The invention is directed to the field of building façade constructions which comprise sandwich panels mounted against a framework and is more particularly directed to a device and method for increasing the shear-load carrying capacity of the panels.

### BACKGROUND ART

Sandwich panels comprising an inner and outer skin, typically made of a stiff, high-density material such as steel, and a low-density core sandwiched in between are widely applied as cladding elements on building facades. Such lightweight panels provide excellent thermal insulation, but have a low load-carrying capacity, due to the risk of delamination.

When it is desirable to mount heavy objects such as e.g. an array of solar panels against a building facade that is clad with such lightweight sandwich panels, one known solution is to erect an auxiliary framework against the façade, whereby the framework is anchored in the ground. The solar panels are then attached to the auxiliary framework. Such a solution is both expensive and time-consuming.

The direct mounting of a support frame to the façade is possible, by drilling numerous holes through the sandwich panels and then screwing the support frame into structural members of the building framework. This is however undesirable, as the numerous screw attachments reduce the insulation functionality of the sandwich panels and is likewise time-consuming.

The number of screw attachments needed can be reduced if the building is clad with specially adapted sandwich panels which comprise internal reinforcement. One example of a sandwich panel with high load-bearing capacity is disclosed in US 8932422. The disclosed panel is a composite panel comprising a thermoplastic core, which is arranged between two cover layers, in which the thermoplastic core is reinforced with fiber-reinforced thermoplastic reinforcing ribs. Such a panel is, of course, more expensive than a standard sandwich panel. In the case of existing facades, it would be very expensive and time consuming to replace standard panels with such special panels.

In the aerospace industry, it is known to retrofit sandwich structures with reinforcement elements. US 5980174, for example, discloses a reinforcing system for a sandwich panel in which a tubular sleeve with a length substantially equal to a thickness of a core material of the panel and with a uniform internal diameter A is inserted into a hole of diameter A that is bored through first and second skins of the panel. A frusto-conical element is inserted into one end of the sleeve and a bolt with a diameter somewhat smaller than A is inserted through the sleeve and frusto-conical element, such that a threaded end of the bolt extends beyond an opposite end of the sleeve. A nut is then screwed onto the threaded end, against one of the skins, e.g. the first skin, and is used to force the frusto-conical element into the sleeve and flare one end thereof, such a first end of the sleeve engages the interior surface of the first skin and a second end of the sleeve engages the interior surface of the second skin.

In the case of a sandwich panels that are mounted against the exterior side of a framework construction, a reinforcing system such as disclosed in US 5980174 cannot be applied, since only an exterior side of a façade panel is accessible after installation. Consequently, there is room for improvement.

### INVENTION SUMMARY

In a first aspect, the present invention provides a reinforcing device for a sandwich panel façade element, mounted against a framework construction of a building, that can be installed in-situ in a straightforward manner, so as to increase the shear-load-carrying capacity of the sandwich panel.

The sandwich panel has an inner skin and an outer skin, between which a low-density core material is bonded. The inner skin will be defined as the skin which is mounted against the framework construction. Each skin has interior and exterior surfaces, whereby the interior surfaces face towards each other. The exterior surface of the inner skin thus bears against structural members of the framework, i.e. surfaces of horizontal and vertical beams that lie in a vertical plane. For simplicity, surfaces lying in the vertical plane will be referred to as vertical surfaces.

The device of the invention comprises a number of components for connecting the outer skin of the panel to a structural member of the framework, the main components being:
- a cover plate that its attachable to the outer skin;
- a bush that is inserted through the sandwich panel, one end of which is enclosed by a closure plate; and
- a bolt that extends through the cover plate, closure plate and bush, whereby in installed condition, a threaded end of the bolt is screwed into a vertical surface of the structural member.

The components of the device are dimensioned with respect to the sandwich panel to be reinforced and the shear load to be supported on the panel. It will further be defined that the sandwich panel has an overall thickness T and that the low-density core has a thickness t.

The bush of the device is a component with a high bending stiffness, and has an outer diameter D, an inner diameter d and an axial length substantially equal to the thickness T of the sandwich panel. The bush is preferably made of steel or other material with a high elastic modulus, and may be a cylindrical tube or a tubular element with a non-circular geometry. In the case of a bush with non-circular geometry, the outer and inner diameters respectively refer to an outer and inner dimension of the bush relative to a centre axis of the bush.

The bush is adapted for installation through an opening created in the sandwich panel, such that an interior end face of the bush bears against the interior surface of the inner skin or lies flush with its exterior surface. The function of the bush is to take up bending loads when a shear force is exerted on the panel outer skin and on the core.

The closure plate of the device is dimensioned to fit onto an exterior end face of the bush, such that an outward facing surface of the closure plate lies flush with the outer skin of the sandwich panel. The closure plate has a first bore for receiving a shank of the bolt, whereby a centre axis of the first bore coincides with the bush centre axis. Furthermore, in installed condition, the closure plate locates the bush in radial direction and in axial direction. Specifically, the closure plate has one or more first portions with a radially outer surface that is dimensioned to bear against the internal diameter d of the bush, and has one more second portions of larger diameter, arranged to bear against the exterior end face of the bush. Suitably, the second portions have a diameter equal to the outer diameter D of the bush.

The closure plate has several functions. In assembled condition, the closure plate centres the bolt, enables radial forces on the bolt to be transmitted to the bush, increases the bending stiffness of the bush and holds the bush in position when the outer skin and foam core experience shear loading.

The cover plate of the device comprises mounting holes, and is configured to be mechanically fastened to the outer skin of the sandwich panel via e.g. screws. The cover plate has a second bore, for receiving the bolt, which is adapted for coaxial arrangement with the first bore of the closure plate. In installed condition, the threaded end of the bolt is received in a threaded hole that is created in the structural member of the framework against which the sandwich panel bears.

Suitably, the mounting holes in the cover plate are evenly spaced from each other, at a radial distance R from the second bore, such that radial forces induced on the cover plate in attached condition, when a shear load is applied to the outer skin, are evenly distributed to the bolt. As explained above, these radial forces are transmitted to the bush, via the closure plate, whereby the axial bolt force that is transmitted to the structural member.

Preferably, to prevent the ingress of moisture, the interior surface of the cover plate is provided with a sealing element. In one example, an annular seal is arranged on the interior surface so as to surround the mounting holes, which has the advantage of protecting the screw connections from exposure to moisture. In other examples, the annular sealing element lies radially inward of the mounting holes.

In an embodiment, the interior end face of the bush is provided with a cutting profile, so that the bush may be used as a cutting tool. At least part of the opening through the sandwich panel may be created using the bush, thereby speeding up the installation procedure.

In a further embodiment, the cutting profile is made of hardened metal, so that the bush can also be used to cut an opening through the outer skin of the sandwich panel.

In a preferred embodiment, the exterior end face of the bush is provided with indentations that extend in axial direction and the closure plate comprises radial protrusions that fit into the indentations. Corresponding recessed portions of the closure plate bear against the internal diameter of the bush, and thus act as first portions of the closure plate to permit the transfer of radial loads. The radial protrusions act as second portions of the closure plate and bear against an axially oriented surface of the indentations.

An advantage of this embodiment, in which the bush end face has indentations as described above, is that such a geometry enables torque to be transferred to the bush. The bush can therefore be coupled to a drill via an adapter that is shaped to fit into the indentations, and then used as a cutting tool as described above.

In a further advantageous embodiment, the threaded end of the bolt is provided with self-tapping functionality, so that the bolt may be used to create the threaded hole in the structural member against which the panel bears. Again, this speeds up the installation process.

In a further aspect, the invention relates to a method of increasing the shear-load-carrying capacity of a sandwich panel that forms part of a building façade and which is mounted against a framework construction of the building. The method comprises installing a reinforcement device as described above at the location of a structural member against which the panel bears, so as to connect the outer skin of the panel to the structural member via the reinforcement device.

More specifically, the method comprises sub-steps of
i. creating an opening in the sandwich panel at the location of the structural member, whereby the opening is shaped to receive the bush of the reinforcement device and extends at least through to the interior surface of the inner skin, which is adjacent to a vertical surface of the structural member;
ii. inserting the bush into the created opening, such that the centre axis of the bush is normal to the vertical surface of the structural member;
iii. creating a threaded opening in the vertical surface of the structural member, whereby a centre axis of the threaded opening coincides with the bush centre axis;
iv. arranging the closure plate at the exterior end face of the bush, such that the centre axis of the first bore coincides with the bush centre axis and the exterior surface of the closure plate lies flush with the outer skin of the sandwich panel;
v. arranging the cover plate against the outer skin of the sandwich panel, such that second bore is coaxial with the first bore;
vi. inserting the bolt with threaded end through first and second bores and into the threaded opening in the structural member; and
vii. fastening the cover plate to the outer skin via mechanical fasteners inserted through the mounting holes.

As described above, the installation process may be simplified and accelerated by using the bush as a cutting tool and using the bolt to create the threaded opening in the structural member.

The device and method of the invention thus provide a straightforward, fast and inexpensive way of increasing the shear-load-carrying capacity of sandwich panels, so that loads can be attached to the outer skin.

The device can be used to reinforce various types of sandwich panel of different sizes that form facade elements of a building. Typical materials for the sandwich panel skins include, steel, aluminium and polyester with glass fiber or carbon fiber reinforcement. Typical materials for the low-density core include PUR, PIR, EPS, stone wool and glass wool.

In a still further aspect, the invention relates to a building façade comprising a plurality of sandwich panels mounted against a framework construction, further comprising a support frame that is attached via mechanical fasters to the outer skin of one or more sandwich panels, wherein each of the one or more sandwich panels to which the support frame is attached comprises a reinforcement device according to the invention. The reinforcement device is installed at the location of a structural member of the framework, whereby the cover plate of the device is mechanically fastened to the outer skin of the panel and whereby a vertical surface of the structural member is provided with a threaded hole for receiving the bolt threaded end.

As will be understood a sandwich panel may be provided with more than one reinforcement device, depending on the load to be supported. When the façade elements have been provided with the necessary reinforcement, panels and other objects can be attached to the outer skin or the frame on the outer skin. In a preferred embodiment, an array of solar panels is mounted to the support frame.

In comparison with known methods of installing solar panels on building facades that comprise lightweight sandwich panels, the method and device of the invention enables faster and more straightforward installation in a manner that minimizes loss of thermal insulation properties of the panels and minimizes piercing of the panel skins.

These and other aspects of the invention are apparent from and will be elucidated with reference to the embodiments described hereinafter and with reference to the accompanying drawings.

### BRIEF DESCRIPTION OF THE DRAWINGS

- Fig. 1a, 1b: show perspective views of a reinforcement device according to the invention;
- Fig. 2: is a cross-sectional view showing the reinforcement device in installed condition through part of a sandwich panel and a beam against which the panel is mounted;
- Fig. 3: is a perspective view of an example of a bush of the device;
- Fig. 4: is a perspective view of a closure plate which is shaped to be received at an end face of the bush depicted in Fig. 3;
- Fig. 5: is a front view of an example of a cover plate of the device

It should be noted that items which have the same reference numbers in different figures, have the same structural features and the same functions. Where the function and/or structure of such an item has been explained, there is no necessity for repeated explanation thereof in the detailed description.

### DETAILED DESCRIPTION OF EMBODIMENTS

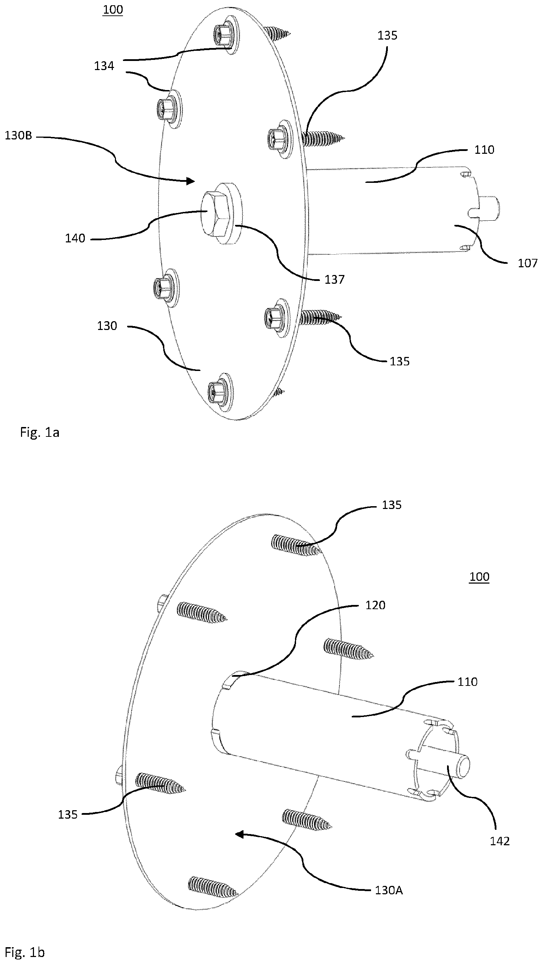

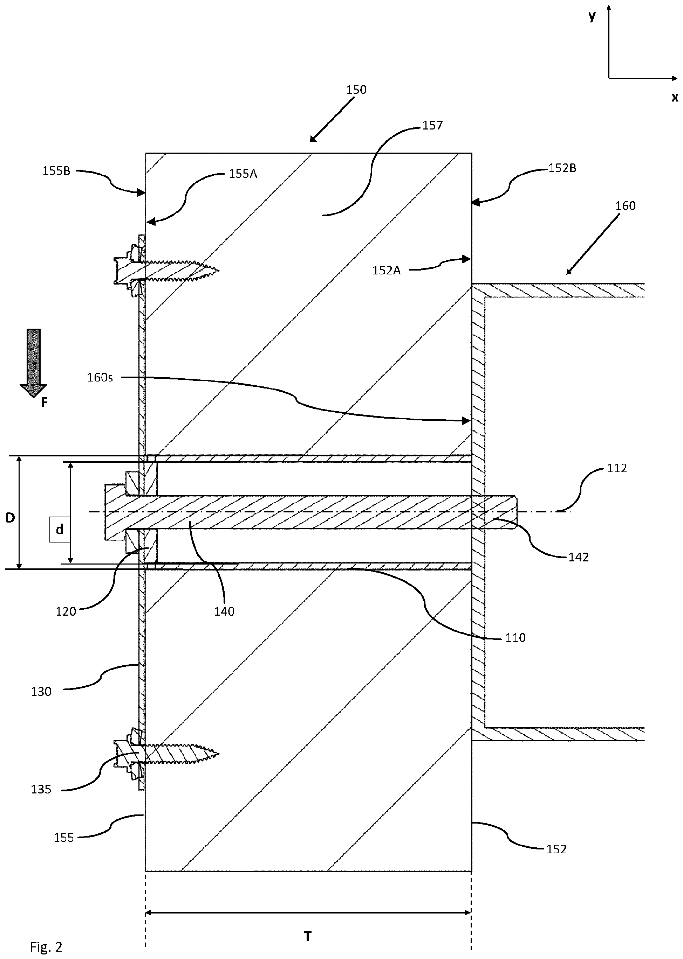

Figs. 1a and 1b show perspective views of a preferred embodiment of a reinforcement device 100 in accordance with the invention. The device is used to increase the shear-load carrying capacity of an existing sandwich panel that forms a façade element of a building, whereby Fig. 2 shows a cross-sectional view of the device 100 in installed condition.

The sandwich panel 150 has an inner skin 152, an outer skin 155 and low-density core 157, e.g. a foam core, which is typically bonded to an interior surface 152A,155A of the inner and outer skins. The panel 150 has an overall thickness T, defined as the distance in axial direction x between an exterior surface 155B of the outer skin and an exterior surface 152B of the inner skin. The foam core has a thickness t, which accounts for the vast majority of the panel thickness. In standard sandwich panels, the inner and outer skin typically has a thickness of 0.5 - 0.6 mm. The sandwich panel 150 is mounted to a framework construction of a building, which is formed by e.g. vertical and horizontal steel beams. Sandwich panels are typically attached to the framework at their upper and lower edges. Between the upper and lower attachment locations, the panels bear against one or more structural members of the framework.

Fig. 2 shows a mid-region of the sandwich panel 150, whereby the exterior surface 152B of the inner skin bears against a vertical surface 160s of a horizontal beam 160, which is a box beam in the depicted example. When the sandwich panel 150 is provided with a reinforcement device according to the invention, it possible to attach loads directly to the panel outer skin 155.

The reinforcement device 100 mechanically connects the outer skin 155 of the panel to the structural member 160 of the building framework and comprises a bush 110, a closure plate 120, a cover plate 130 and a bolt 140 with a threaded end that is screwed into the structural member. The function of the bush is to support shear loads, i.e. forces in radial direction y, thereby relieving the foam core 157 and the bond between the foam core and the outer skin from shear. The bush 110 has a high bending stiffness and is made from a material with a high elastic modulus, such as steel. The bush is preferably a cylindrical element with an outer diameter D and an inner diameter d. Other shapes are possible, e.g. the bush may have a triangular cross-section or other polygonal shape.

The difference between the inner and outer diameters, i.e. a wall thickness of the bush depends on the magnitude of the load to be supported. The bush has a length which is essentially equal to the thickness T of the sandwich panel 150, or is somewhat shorter, e.g. equal to the thickness t of the foam core 157. In one example, where the sandwich panel has a thickness of 100 mm, the bush has an outer diameter of 30-40 mm, a wall thickness of 2.5 - 4 mm and a length of 98 - 99 mm.

The bush is installed in an opening of diameter D, which is created in the sandwich panel by drilling a hole through the outer skin 155. The created opening preferably extends to the interior surface 152A of the inner skin, such that in installed condition an end face of the bush is in contact with said interior surface 152A. It is also possible for the opening to extend through to the vertical surface 160s of the box beam, by drilling through the inner skin 152 as well, although it is generally preferable to minimize the number and size of penetrations. A hole is drilled through the inner skin 152 in order to create a threaded opening in the beam 160, for receiving a threaded end of the bolt 140, but this hole has a diameter considerably smaller than the diameter D of the bush.

It will be defined that the bush has first and second end faces, whereby in installed condition the first end face bears against the interior surface 152A of the inner skin, or against the vertical surface of the box beam. The closure plate 120 is arranged at the second end face. Specifically, the closure plate is fitted to the bush end face, so as to be retained in radial direction and in one axial direction, to permit radial and axial forces on the closure plate 120 to be transmitted to the bush.

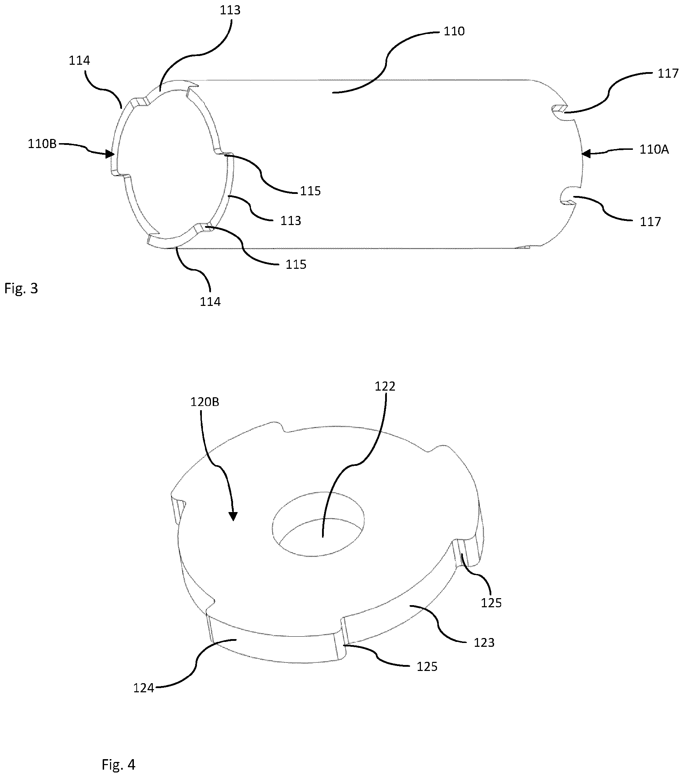

The bush and the closure plate are shown in more detail in Figs. 3 and 4 respectively. The closure plate 120 is an annular element with a bore 122 for receiving a shank of the bolt 140, whereby in assembled condition, the bore 122 has a centre axis that coincides with a centre axis 112 of the bush 110 (refer Fig. 2). One function of the closure plate 120 is to centre the bolt. A further function of the closure plate is to transmit shear (vertical) forces on the bolt to the bush via a radial interface between the bush and a radially outer surface of the closure plate 120.

In the depicted example, the radially outer surface of the closure plate 120 is stepped and comprises three recessed portions 123. This creates three radial protrusions 124 with side surfaces 125 in circumferential direction. The distance from the centre axis to the radially outer surface of the protrusions 124 is essentially equal to D/2. The distance from the centre axis to the radially outer surface of the recesses 123 is essentially equal to d/2, so that the recessed portions fit into the inner diameter of the bush.

With reference to Fig. 3, the second end face 110B of the bush 110 is also stepped and comprises three indentations 113 with a depth in axial direction x that is substantially equal to or somewhat smaller than a thickness of the closure plate 120. The indentations 113 are shaped to receive the radial protrusions 124 of the closure plate, and are dimensioned relative to a thickness of the closure plate such that in assembled condition, an outer surface 120B of the closure plate lies flush with the exterior surface 155B of the outer skin. An inner surface of the radial protrusions 124 bears against the indentations 113 in axial direction.

The indentations 113 create three axial protrusions 114 in the end face 110B, which have side surfaces 115 in circumferential direction. The radially outer surface of the recessed portions 123 is received within the radially inner surface of the axial protrusions 114 of the bush end face. The bush thus retains the closure plate in radial direction, in one axial direction and in circumferential direction, via engagement between the side surfaces 115 of the axial protrusions on the bush and the side surfaces 125 of the radial protrusions on the closure plate.

It is not necessary for the second end face of the bush 110 to comprise indentations 113. In an alternative embodiment, the second end face of the bush is continuous, and the closure plate has a first portion with a continuous radially outer surface that fits within the inner diameter of the bush, to retain the closure element in radial direction. For retention in axial direction, the closure plate suitably comprises a second portion of a larger diameter, such that the plate has an axially oriented surface that bears against the end face of the bush. Other solutions for retaining the closure plate in axial and radial direction on the bush are of course possible.

An advantage of axial indentations 113 in the end face 110B is that this allows torque to be transferred to the bush. An adapter with a geometry like that of the closure plate may be attached to a drill, such that the bush can be used as a cutting tool. As shown in Fig. 3, the first end of the bush 110A is then suitably provided with e.g. cutting teeth 117. Using the bush as a cutter speeds up the installation process, which will be described in more detail later.

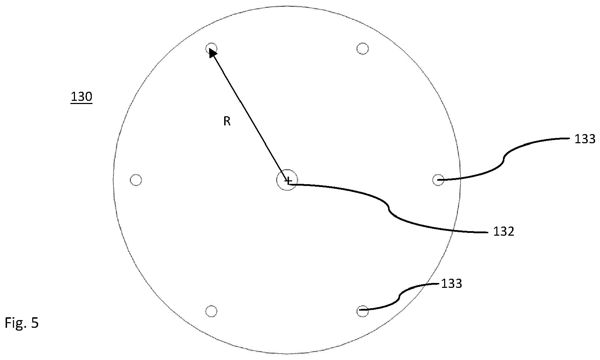

Returning to Figs. 1a, 1b and 2, the device further comprises a cover plate 130, such as shown in Fig. 5. In the depicted example, the plate is a disc-shaped element with a bore 132 for receiving the bolt 140 and mounting holes 133 arranged at evenly spaced intervals at a radial distance R from the bore 132. The mounting holes receive screws 135 for attaching the cover plate to the outer skin 155 of the sandwich panel, suitably using washers 134 disposed between an exterior surface 130B of the cover plate and the screw heads. The magnitude of the radial distance R to the mounting holes 133 depends on the number of screws and the distance therebetween that is needed for the load in question. Typically, R is 2 - 4 times greater than the outer diameter D of the bush 110 and the cover plate has 5 - 7 mounting holes 133.

After the bush 110 and closure plate 120 have been installed, an interior surface 130A of the cover plate is arranged against the exterior surface 155B of the outer skin and the bolt 140 is inserted through the bore 132 of the cover plate 130 and the bore 122 of the closure plate 120, and is screwed into the threaded hole drilled into the box beam 160. Preferably, the interior surface 130A is provided with a seal for preventing the ingress of moisture. The bolt is suitably mounted against the exterior surface 130B of the cover plate via a washer 137 with sealing functionality.

In installed condition, the interior surface 130A of the cover plate bears against the outer skin 155 of the sandwich panel and against an axially oriented outer surface 120B of the closure plate 120. The bolt force therefore presses the bush 110 against the inner skin 152 of the sandwich panel and against the box beam 160. Let us assume that a load is attached to the outer skin 155 of the sandwich panel that exerts a force F indicated by the thick arrow in Fig. 2. This produces radial forces on the cover plate 130, which are transmitted to the bolt 140 and from the bolt to the bush 110, via the closure plate 120. The closure plate 120 also increases the bending stiffness of the arrangement and keeps the bush 110 in position when a vertical load acts on the outer skin 155 and foam core 157 of the sandwich panel.

Consequently, a reinforcement device according to the invention enables loads to be attached directly to the outer skin of sandwich panels, without the need to drill multiple holes through the entire sandwich panel, for multiple screw attachments to a structural member of the framework construction.

The invention further relates to a building façade clad with sandwich panels mounted against a framework construction, whereby one or more of the sandwich panels are provided with a reinforcement device according to the invention. As mentioned, the dimensions of the reinforcement device may be adapted depending on the magnitude of the load to be supported. It is also, of course possible to fit a sandwich panel with two or more reinforcement devices, depending on the size of the sandwich panel and the load to be supported.

In a preferred embodiment, a frame for supporting solar panels or other type of panel is attached to the outer skin of the façade sandwich panels, and each sandwich panel that will experience vertical loading when the solar panels are suspended on the frame is fitted with at least one reinforcement device according to the invention.

The device of the invention can also be installed in a quick and straightforward manner.

An example of a method for installing the device in a sandwich panel, and thus increasing the shear-load-carrying capacity of the panel, will now be described.

In a first step, an opening for the bush 110 is created in the sandwich panel 150. A hole with a diameter equal to the outer diameter D of the bush 110 is drilled through the outer skin 155 and though at least part of the foam core 157. In an embodiment, a starter hole is drilled and, if necessary, core material can be removed from the starter hole.

When the bush has a geometry that permits torque transfer, and the interior end face has cutting functionality, the bush is preferably used to create the remainder of the opening through the foam core 157. The bush is preferably is cylindrical element, whereby the exterior end face is provided with e.g. indentations 113 such as described above. It is also possible for the bush to a have a non-circular geometry that would permit torque transfer.

A special adapter is attached to a drill, whereby the adapter has a geometry that is shaped to engage with the bush geometry. The remainder of the opening is created using the bush 110, until its interior end face reaches the interior surface 152A of the inner skin. Steps of creating the opening and installing the bush can thus be combined.

In a further embodiment of the method, the bush 110 is also used to cut through the outer skin 155 and create the entire opening through the sandwich panel. Preferably, the cutting profile 127 on the bush is then formed from hardened metal.

In an advantageous further development, a special positioning tool is used to install the bush 110, to ensure that the bush centre axis 112 is normal to the vertical plane. The tool is mounted against the outer skin 155 of the sandwich panel such that a rear surface of the tools lies in the vertical plane of the outer skin. In many cases the outer skin is made of a thin sheet of metal and a rear surface of the tool may comprise magnets for magnetic attachment of the positioning tool to the outer skin. A main body of the tool has a through hole, which is shaped and dimensioned to receive the outer diameter of the bush 110. The through-hole has a centre axis that is normal to the vertical plane and has a length of e.g. 25 - 40 mm that is sufficient to guide the bush, i.e. keep it straight during installation.

The method further comprises a step of creating a threaded opening the vertical surface 160s of the framework structural member, for receiving the threaded end 142 of the bolt. This can be done after the bush has been installed and before the closure plate 120 is fitted to the exterior axial end face of the bush.

Alternatively, the threaded opening in the vertical surface 160s of the structural member can be created after the closure plate 120 has been fitted, using its bore to centre an appropriate drill bit. In an advantageous embodiment, the threaded end 142 of the bolt has a self-tapping head, such that bolt is used to create the threaded opening, thereby reducing the installation time. The cover plate 130 is arranged against the outer skin, and the bolt is inserted through its bore 132, through the bore 122 of the closure plate 120 and the self-tapping threaded end is driven into the vertical surface 160s. Finally, the cover plate is mechanically fastened to the outer skin 155 via the mounting holes 133.

The device and method of the invention enable sandwich panels, which form façade elements of a building, to be reinforced in a straightforward, efficient and economical manner.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A reinforcement device (100) for increasing the shear-load-carrying capacity of a sandwich panel (150) that forms part of a building façade and which is attached to a framework construction of the building, whereby the sandwich panel has inner and outer skins (152, 155), the inner skin having an exterior surface (152B) that bears against the framework, and wherein the device comprises:
• a bush (110) of high bending stiffness having an outer diameter D, an inner diameter d and an axial length substantially equal to a thickness T of the sandwich panel, whereby the bush is adapted for installation through an opening created in the sandwich panel such that an interior end face of the bush bears against an interior surface (152A) of the inner skin (152) or lies flush with its exterior surface (152B);
• a closure plate (120) arrangeable at an exterior end face (110B) of the bush, such that an exterior surface (120B) of the closure plate lies flush with the outer skin (155) of the sandwich panel, whereby the closure plate has a first bore (122) with a centre axis that coincides with a centre axis (112) of the bush, and comprises:
- one or more first portions (123) with a radially outer surface that fits within the inner diameter d of the bush, to permit radial forces to be transmitted to the bush; and
- one or more second portions (124) of larger diameter, arranged to bear against the exterior end face (110B) of the bush, to permit axial forces to be transmitted to the bush;
• a cover plate (130) comprising a second bore (132), adapted for coaxial arrangement with the first bore (122) of the closure plate, the cover plate further comprising a plurality of mounting holes (133) arranged at a radial distance R from the second bore, whereby the cover plate (130) is configured for attachment via screws (135) to the outer skin (155) of the sandwich panel; and
• a bolt (140) having a threaded end (142) that is received through the first and second bores (122, 132) and extends beyond the exterior end face of the bush, which is configured for attachment in a threaded hole provided in a structural member (160) of the framework construction.

2. The device of claim 1, wherein the interior end face (110A) of the bush has a cutting profile (117), such that the bush (110) may be used as a cutting tool for at least partly creating the opening through the sandwich panel.

3. The device of claim 2, wherein the cutting profile is formed from hardened metal.

4. The device of any preceding claim, wherein the exterior end face (110B) of the bush (110) is provided with indentations (113) and the closure plate (120) comprises radial protrusions (124) that fit into the indentations, whereby corresponding recessed portions (123) on the closure plate act as the first portion of the closure plate and the radial protrusions (124) act as the second portion.

5. The device of any preceding claim, wherein the bolt threaded end (142) has self-tapping functionality.

6. The device of any preceding claim, wherein an interior surface (130A) of the cover plate, which is adapted to bear against the outer skin (155) of the sandwich panel, is provided with a sealing element for preventing the ingress of rainwater.

7. A building façade comprising a plurality of sandwich panels (150) mounted against a framework construction, wherein one or more of the sandwich panels comprises a reinforcement device (100) as defined in any of claims 1-6, installed at the location of a structural member (160) of the framework against which the sandwich panel (150) bears, whereby the cover plate (130) of the device is attached via mechanical fasteners (135) to the outer skin (155) of the panel and whereby a vertical surface (160s) of the structural member is provided with a threaded hole for receiving the threaded end (142) of the bolt.

8. The building façade of claim 7, further comprising a support frame that is attached via mechanical fasteners to the outer skin (155) of one or more sandwich panels (150), wherein each of the one or more sandwich panels to which the support frame is attached comprises a reinforcement device (100) as defined in any of claims 1-6, and wherein a plurality of solar panels are mounted to the support fame.

9. A method of increasing the shear-load-carrying capacity of at least one sandwich panel (150) that forms part of a building façade and which is mounted against a framework construction of the building, the method comprising a step of installing a reinforcement device (100) as defined in any of claims 1 - 6 at the location of a structural member (160) of the framework construction, such that an outer skin (155) of the sandwich panel is connected to the structural member via the reinforcement device.

10. The method of claim 9, comprising sub-steps of
i. creating an opening in the sandwich panel (150) at the location of the structural member (160), whereby the opening is shaped to receive the bush (110) of the reinforcement device and extends at least through to the interior surface (152A) of the inner skin, which is adjacent to a vertical surface (160s) of the structural member;
ii. inserting the bush into the created opening, such that the centre axis (112) of the bush is normal to the vertical surface (160s) of the structural member;
iii. creating a threaded opening in the vertical surface (160s) of the structural member, whereby a centre axis of the threaded opening coincides with the bush centre axis (112);
iv. arranging the closure plate (120) at the exterior end face of the bush, such that the centre axis of the first bore (122) coincides with the bush centre axis (112) and the exterior surface (120B) of the closure plate lies flush with the outer skin (155) of the sandwich panel;
v. arranging the cover plate (130) against the outer skin (155) of the sandwich panel, such that second bore (132) is coaxial with the first bore (122);
vi. inserting the bolt with threaded end (142) through first and second bores (122, 132) and into the threaded opening in the structural member;
vii. fastening the cover plate (130) to the outer skin via mechanical fasteners (135) inserted through the mounting holes (133).

11. Method of claim 10, comprising further steps of:
• attaching a positioning tool to the outer skin of the sandwich panel, whereby the positioning tool has a rear surface lying in a vertical plane of the outer skin; a through hole with a shape that corresponds to the shape of a radially outer surface of the bush and a centre axis that extends normal to the vertical plane; and
• inserting the bush through the hole in the positioning tool in the step of installing the bush, to ensure that the centre axis of the bush is normal to the vertical plane.

12. Method of claim 10 or 11, wherein the interior end face (110A) of the bush has a toothed profile and wherein the bush is used to cut an opening through at least part of a low-density core (157) of the sandwich panel. (150)

13. Method of claim 12, wherein the toothed profile comprises hardened metal and wherein the bush (110) is used as a cutting tool to at create the opening through the sandwich panel.

14. Method of claim 12 or 13, wherein the exterior end face of the bush (110B) comprises shaped indentions (113) and wherein the method further comprises rotationally coupling a drill to the bush via an adapter element that is shaped to cooperate with said indentations.

15. Method of any of claims 9 to 14, wherein the bolt (140) of the reinforcement device has a threaded end with self-tapping functionality and the step of creating the threaded opening in the structural member (160) is carried out using the bolt.
